# EUROPÄISCHE PATENTSCHRIFT

(11) **EP 2 254 780 B1**
(45) Veröffentlichungstag und Bekanntmachung des Hinweises auf die Patenterteilung: **05.10.2016**
(21) Anmeldenummer: 08873242.5
(22) Anmeldetag: 25.11.2008
(51) Int. Cl.: B60W 20/00, B60K 6/48, F02D 41/34, B60W 10/06, B60W 10/08

(54) **VERFAHREN UND ANORDNUNG ZUR ANSTEUERUNG EINES FAHRZEUGES MIT HYBRIDANTRIEB**
METHOD AND ARRANGMENT FOR CONTROLLING A VEHICLE WITH A HYBRID DRIVE
PROCÉDÉ ET DISPOSITIF DE COMMANDE D'UN VÉHICULE À ENTRAÎNEMENT HYBRIDE

(30) Priorität: 10.03.2008 DE 102008000579
(43) Veröffentlichungstag der Anmeldung: 01.12.2010
(73) Patentinhaber: Robert Bosch GmbH, 70442 Stuttgart (DE)
(72) Erfinder: HERNIER, Markus, 70839 Gerlingen (DE); GREIS, Andreas, 70193 Stuttgart (DE)
(86) Internationale Anmeldenummer: PCT/EP2008/066151
(87) Internationale Veröffentlichungsnummer: WO 2009/112104

(56) Entgegenhaltungen:
- EP-A- 1 083 319
- DE-A1-102005 051 002
- US-A1- 2004 149 255
- US-A1- 2006 042 587

## Beschreibung

### Stand der Technik

Die Erfindung betrifft ein Verfahren zur Ansteuerung eines Fahrzeuges mit Hybridantrieb gemäß dem Oberbegriff des Patentanspruchs 1 und eine Anordnung zur Durchführung des Verfahrens gemäß dem Oberbegriff des Patentanspruchs 8.

Fahrzeuge mit einer hybriden Antriebsstruktur, wie sie in der DE 10 2005 051 002 A1 beschrieben sind, weisen einen Verbrennungsmotor und ein zweites Antriebsaggregat auf, welches beispielsweise ein Elektromotor oder eine hydraulische Antriebsmaschine sein kann. In solchen Hybridantrieben ergeben sich hinsichtlich der Lastanforderungen an den Verbrennungsmotor neue Randbedingungen.

Die EP-A-1 083 319 betrifft ein Hybridfahrzeug sowie ein Verfahren und eine Vorrichtung zum Betreiben des Hybridfahrzeuges. Das Hybridfahrzeug besteht dabei aus einem Verbrennungsmotor, welcher in verschiedenen Betriebsarten arbeiten kann. Diese drei unterschiedlichen Betriebsarten werden in Abhängigkeit von der Geschwindigkeit des Hybridfahrzeuges und des gewünschten Antriebsmomentes eingestellt.

Aus der US 2006/0042587 A1 ist ein Verfahren zum Betreiben eines Hybridfahrzeuges bekannt, welches einen Verbrennungsmotor und einen Elektromotor umfasst. Um die Abgasemissionen des Verbrennungsmotors zu reduzieren, arbeitet der Verbrennungsmotor in zwei verschiedenen Betriebszuständen. Bei einem ersten Betriebszustand, dem sogenannten HCLI-Betrieb, wird der Verbrennungsmotor mit einer homogenen Gemischverbrennung betrieben und einer späteren Kraftstoffeinspritzung, wobei die Kraftstoffeinspritzung in einen Bereich von ungefähr 50° - 5° des Kurbelwellenwinkels vor dem Erreichen des oberen Totpunktes der Kompressionsphase eines Zylinders des Verbrennungsmotors erfolgt. In einem zweiten Betriebszustand, dem sogenannten HPLI-Betriebszustand, wird mit einer Gemischverbrennung bei niedrigen Temperaturen gearbeitet und ebenfalls mit einer späteren Einspritzung des Kraftstoffes. Dabei wird der Kraftstoff in einen Bereich zwischen 2° des Kurbelwellenwinkels vor Erreichen des oberen Totpunktes und ungefähr 20° Kurbelwellenwinkel nach dem Erreichen des oberen Totpunktes eingespritzt

So kann das Antriebsmoment während des Fahrbetriebes von beiden Antriebsaggregaten aufgebracht werden. Insofern die gespeicherte Energiemenge und Leistung des zweiten Antriebsaggregates ausreicht, wird das Fahrzeug ohne Verbrennungsmotor angetrieben. Diese vom zweiten Antriebsaggregat aufgebrachte Energie wird in anderen Fahrsituationen vom Verbrennungsmotor durch eine höhere Lastabgabe an den Antriebsstrang erzeugt. Damit arbeitet der Verbrennungsmotor im Hybridbetrieb auf einem höheren Lastniveau als im konventionellen Fahrzeug. Wird der Verbrennungsmotor wie in einem konventionellen Fahrzeug angesteuert, kommt es bei hohen Lastsprüngen zu einem hohen Ausstoß an Schadstoffen, da die bereitgestellte Luftmenge zur Oxidation des Kraftstoffes nicht ausreicht.

Der Erfindung liegt somit die Aufgabe zugrunde, ein Verfahren zur Ansteuerung eines Fahrzeuges mit Hybridantrieb anzugeben, bei welchem in allen Betriebszuständen des Hybridantriebes die Schadstoffemissionen des Verbrennungsmotors so gering wie möglich gehalten werden.

Der Vorteil der Erfindung besteht darin, dass das genaue Zusammenspiel zwischen den beiden Antriebsaggregaten im Fahrzeugzeug berücksichtigt wird, woraus sich neue Steuer- und Regelungsmöglichkeiten für den Verbrennungsmotor ergeben. Dies gilt insbesondere für einen Verbrennungsmotor mit einem mageren Verbrennungskonzept. Das Steuer- und Regelverhalten des Verbrennungsmotors wird daher in Abhängigkeit von der Betriebsweise des zweiten Antriebsaggregats gemäß dem Kennzeichen des Patentanspruchs 1 eingestellt.

Die Wahl des Steuer- und Regelzustandes beeinflusst die Lastabgabe des Verbrennungsmotors, woraus sich eine geänderte Momentenaufteilung zwischen Verbrennungsmotor und zweiter Antriebseinheit ergibt. Diese verschobene Momentenaufteilung trägt zu einer optimalen Einstellung des Betriebspunktes des Verbrennungsmotors und somit zur Minimierung der Schadstoffemissionen des Verbrennungsmotors bei.

Durch die Auswahl zwischen den unterschiedlichen Steuer- und Regelzuständen lässt sich das Steuer- und Regelverhalten des Verbrennungsmotors einfach an die aktuelle hybride Betriebsweise anpassen.

Die Steuerung der Einspritzmenge und die Regelung des Luftpfades kann auch als Laststeuerung bezeichnet werden, da die Einspritzmenge des Kraftstoffes durch die geforderte Last bestimmt wird. Die zur Oxidation des Kraftstoffes notwendige Sauerstoffmenge sowie die durch Abgasrückführung bereitgestellten Abgase bestimmen die Regelung des Luftpfades.

Der zweite Steuerungs- und Regelzustand soll immer eingestellt werden, wenn das zweite Antriebsaggregat in Abhängigkeit von der möglichen Leistungsabgabe des Elektromotors und dem Ladezustand der Batterie dazu in der Lage ist. Der Luftpfad ist in der Steuer- und Regelung immer langsam. D.h. bei transienten Vorgängen stellen sich die den Luftpfad bestimmenden Größen immer verzögert ein. Deshalb wird in dem zweiten Steuer- und Regelzustand die Einspritzmenge und somit die Last auf das Luftangebot begrenzt. Die Konsequenz daraus ist eine bessere Kontrolle der Emissionen. Die Last wird aber so in gewissen Fahrsituationen (transient bzw. dynamisch) begrenzt, da das Sauerstoffangebot nicht ausreicht. Das hängt aber auch entscheidend von der jeweiligen Applikation ab.

In einer Weiterbildung werden der Steuer- und Regelstruktur des Verbrennungsmotors zur Umschaltung zwischen den beiden Steuer- und Regelzuständen Betriebsparameter des zweiten Antriebsaggregates von einer übergeordneten Koordinierungseinheit übermittelt. Die Betriebsparameter des zweiten Antriebsaggregates stellen dabei die Informationen dar, mit deren Hilfe darüber entschieden wird, ob der erste oder der zweite Steuer- und Regelzustand am Verbrennungsmotor eingestellt wird.

Ist die zweite Antriebseinheit als Elektromotor ausgebildet, gehört zu diesen Betriebsparametern die Momentengrenzen als Funktion der Drehzahl und der

Temperatur. Über die mit einem Batteriemanagementsystem verbundene Koordinierungseinheit wird eine Information über den Energieinhalt des Energiespeichers weitergeleitet.

Durch die Koordinierungseinheit wird das Antriebsmoment auf den Verbrennungsmotor und das zweite Antriebsaggregat aufgeteilt. Somit wird die Schadstoffemission mit Funktionen minimiert, die ausschließlich den hybridspezifischen Betrieb berücksichtigen. Zu diesem Zweck erfasst die Koordinierungseinheit, die Drehmomentenanforderung. In Abhängigkeit des Ist-Momentes des Verbrennungsmotors und des Betriebszustandes des zweiten Antriebsaggregates nimmt die Koordinierungseinheit die Antriebsmomentenaufteilung auf den Verbrennungsmotor und das zweite Antriebsaggregat vor.

Die Koordinierungseinheit kann neben der Momentenkoordination noch weitere Funktionen, wie eine Fahrzeugsteuerung enthalten, was eine bessere Auslastung der Koordinierungseinheit zugrunde liegenden Recheneinheit zur Folge hat.

In dem Fall, in welchem im zweiten Steuer- und Regelzustand des Verbrennungsmotors in einen Brennraum des Verbrennungsmotors Kraftstoff vor der Zündung teilweise eingespritzt und homogenisiert und teilweise erst nach der Zündung in den Brennraum eingespritzt wird, kommt es zu einer weiteren Verringerung der Schadstoffemission durch dieses (p) HCCI-Brennverfahrens (Partly Homogeneous Charge Compression Ignition).

In einer anderen Weiterbildung der Erfindung ist eine Anordnung zur Ansteuerung eines Fahrzeuges mit einem Gemäß dem Patentanspruch 8 ausgebildet. Durch die Berücksichtigung des hybridischen Betriebszustandes des Fahrzeuges wird die Schadstoffemission des Fahrzeuges begrenzt.

Um die Anpassung des Hybridantriebes so optimal wie möglich an den Lastfall zu gestalten, schaltet das Motorsteuergerät die Steuer- und Regelstruktur zwischen mindestens zwei Steuer- und Regelzuständen.

Um eine den Betriebszuständen des Verbrennungsmotors und des zweiten Antriebsaggregates optimal entsprechende Momentanforderung zu erreichen, sind das Motorsteuergerät und das Antriebssteuergerät mit einer die Drehmomentenanforderung auf das Motorsteuergerät und das Antriebssteuergerät aufteilenden Koordinierungseinheit verbunden. Diese Koordinierungseinheit wertet die vom Motorsteuergerät und dem Antriebssteuergerät gelieferten Betriebsdaten aus und bestimmt in Abhängigkeit von dieser Auswertung die Verteilung der Drehmomentenanforderung auf die beiden Antriebsaggregate.

In einer Ausgestaltung ist die Koordinierungseinheit direkt mit dem Antriebssteuergerät des als Elektromotor ausgebildeten zweiten Antriebsaggregates und/oder einem Batteriemanagementsystem verbunden, wodurch alle Betriebsparameter des Elektromotors und des Energiespeichers an die Koordinierungseinheit gemeldet werden.

Bei einer Ausbildung der Koordinierungseinheit als Fahrzeugsteuergerät kann auch das Fahrverhalten des Fahrzeuges, wie Geschwindigkeit, Betätigung der Bremse u.ä. bei der Bestimmung der Momentenaufteilung mit berücksichtigt werden.

Die Erfindung lässt zahlreiche Ausführungsformen zu. Eine davon soll anhand der in der Zeichnung dargestellten Figuren näher erläutert werden.

Es zeigt:
- Figur 1:: Ausführungsbeispiel für eine erweiterte Steuergerätestruktur für Fahrzeuge mit Hybridantrieb
- Figur 2:: Steuer- und Regelstruktur für ein Hybridfahrzeug

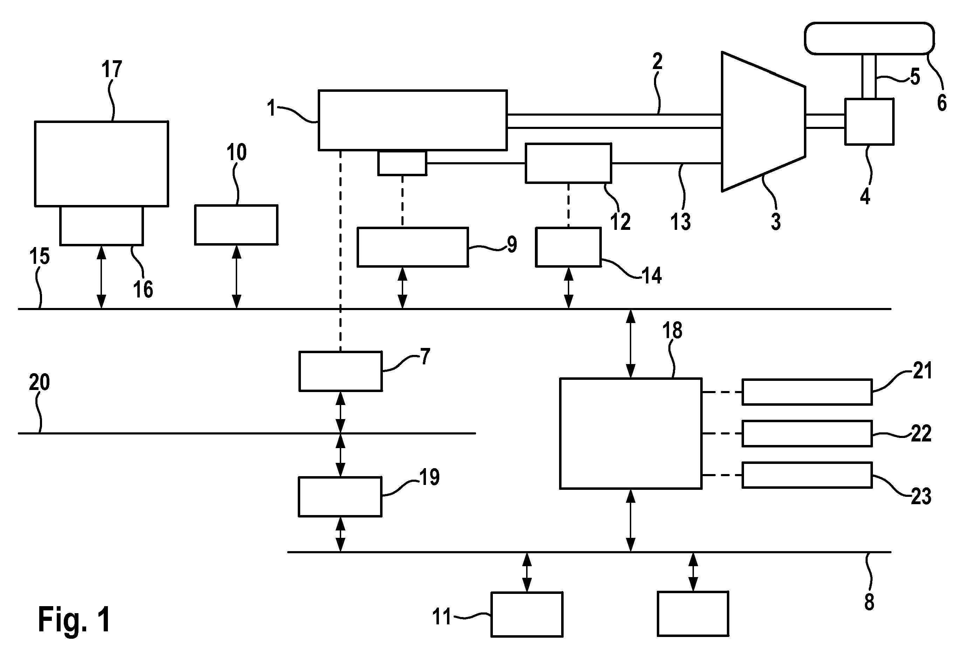

Figur 1 zeigt eine erweiterte Steuergerätestruktur für ein Fahrzeug mit einem Hybridantrieb. Der Hybridantrieb wird von einem Verbrennungsmotor 1 und einem Elektromotor 12 als zweite Antriebseinheit gebildet. Es kann jeder beliebige Verbrennungsmotor eingesetzt werden, solange es sich um einen mager betriebenen Motortyp handelt.

Der Verbrennungsmotor 1 ist über den Antriebsstrang 2 mit dem Getriebe 3 verbunden, welches wiederum über die Kupplung 4 auf die Radachse 5 zum Antrieb des Rades 6 führt.

Der Elektromotor 12 ist über einen eigenen Antriebsstrang 13 mit dem Getriebe 3 verbunden und trägt damit zum Antrieb der Räder 6 und zum Gesamtdrehmoment des Fahrzeuges bei. Darüber hinaus verfügt der Elektromotor 12 über ein eigenes Elektromotorsteuergerät 14, welches an einen Hybrid CAN-Bus15 angeschlossen ist, über welchen alle die Steuergeräte miteinander kommunizieren, die Einfluss auf den Hybrid spezifischen Fahrbetrieb des Fahrzeuges haben. Dazu gehören das Batteriemanagementsystem 16 der Traktionsbatterie 17, die Niedervoltbatterie 10, der AC-Kompressor 9 (Wechselstrom-Kompressor) und weitere nicht weiter dargestellte Steuergeräte, die u.a. das Getriebe steuern.

Ein Fahrzeugsteuergerät 18 kommuniziert über den Hybrid CAN Bus 15 mit den daran angeschlossenen Steuergeräten, insbesondere dem Elektromotorsteuergerät 14. Darüber hinaus ist es über den CAN Bus 8 mit dem Steuergerät der Bremse 11 verbunden.
Über ein Gateway 19 steht der CAN Bus 8 mit einem Gateway CAN Bus 20 in Verbindung, über welchen die einzelnen Bussysteme des Fahrzeuges miteinander kommunizieren.

Das Motorsteuergerät 7 ist über den Gateway-CAN Bus 20 und den CAN Bus 8 mit dem Fahrzeugsteuergerät 18 verbunden.

Das Fahrzeugsteuergerät 18 ist mit verschiedenen Gebern des Fahrzeuges, wie Fahrwertgeber 21, dem die Kühlwassertemperatur angebenden Temperaturgeber 22 und dem Spannungsmesser 23 der DC/ DC-Wandlung verbunden. Von diesen Gebern 21, 22, 23 erhält das Fahrzeugsteuergerät 18 Informationen über die aktuellen Betriebsparameter für den Fahrzeugbetrieb.

Im Fahrzeugsteuergerät 18 wird das Drehmoment des Abtriebs für das Hybridfahrzeug gesteuert. Zu diesem Zweck wertet das Fahrzeugsteuergerät 18 die von dem Fahrwertgeber 21 gelieferten Solldaten aus, die der Fahrer des Hybridfahrzeuges über das Fahrpedal einstellt. Dabei wird das für den Abtrieb relevante Drehmoment sowohl vom Verbrennungsmotor 1 als auch vom Elektromotor 12 aufgebracht. Das Fahrzeugsteuergerät 18 arbeitet als Koordinierungseinheit und koordiniert die Beiträge, welche vom Verbrennungsmotor 1 und vom Elektromotor 12 zum Drehmoment geleistet werden. Das Fahrzeugsteuergerät 18 ist somit sowohl dem Motorsteuergerät 7 als auch dem Elektromotorsteuergerät 14 übergeordnet.

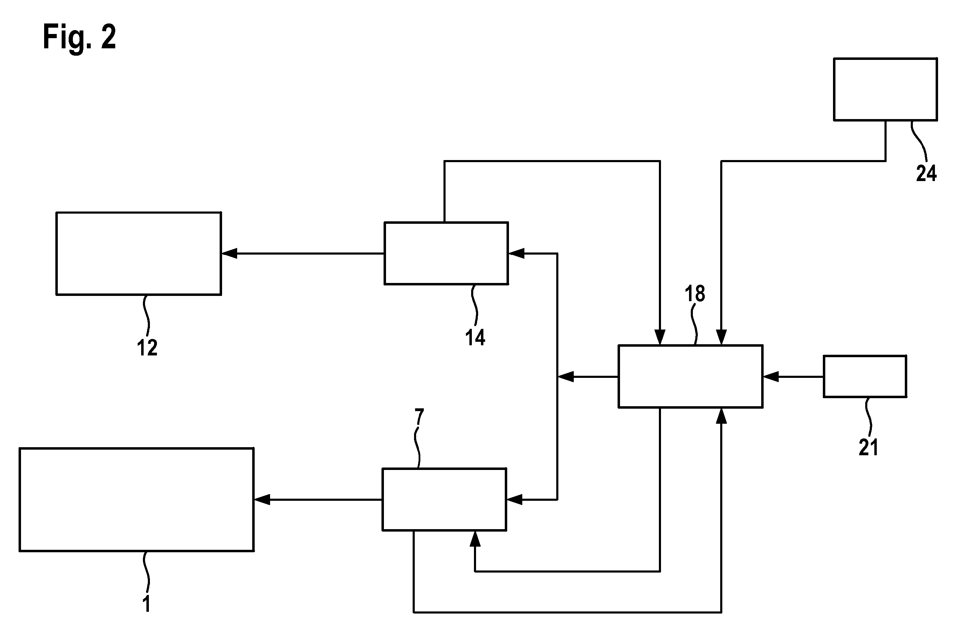

In der Steuer- und Regelstruktur des Hybridfahrzeuges, wie sie in Figur 2 dargestellt ist, erhält das Fahrzeugsteuergerät 18 nicht nur die Drehmomentenanforderung vom Fahrwertgeber 21, sondern auch Betriebsdaten von der Elektromotorsteuereinheit 14, von der Motorsteuereinheit 7 und von den Batteriemanagementsystem 24.

Die Elektromotorsteuereinheit 14 liefert Informationen über die Drehmomentengrenzen des Elektromotors 12. Diese Drehmomentengrenzen werden als Funktion der Drehzahl und der Motortemperatur des Elektromotors 12 ausgegeben. Darüber hinaus wird von der Elektromotorsteuereinheit 14 der Zeitbereich eingeschätzt, in welchen die angegebenen Drehmomente wirksam sind und dies an das Fahrzeugsteuergerät 18 weitergeleitet.

Das Batteriemanagementsystem 24 meldet an das Fahrzeugsteuergerät 18 den Ladezustand des Energiespeichers.
Seitens des Motorsteuergerätes 7 wird das Ist-Drehmoment und die Temperatur des Verbrennungsmotors 1 gemessen und an das Fahrzeugsteuergerät 18 weitergeleitet. In Abhängigkeit von diesen Betriebsparametern und einer Betriebsstrategie, nach der der Verbrennungsmotor in verbrauchsgünstigen und emissionsoptimalen Bereichen betrieben werden soll, bestimmt das Fahrzeugsteuergerät 18 die Drehmomentenforderung für den Elektromotor 12 und den Verbrennungsmotor 1.

Wird von dem Motorsteuergerät 7 ein sehr viel niedrigeres Ist- Drehmoment als das Wunsch- Drehmoment an das Fahrzeugsteuergerät 18 zurück gemeldet, wird das Differenzdrehmoment von dem Elektromotor 12 aufgebracht.

Das Motorsteuergerät 7 setzt die Drehmomentenforderung des Fahrzeugsteuergerätes 18 in entsprechende Werte für die Einspritzung und die Luftzuführung für den Verbrennungsmotor 1 um.

Neben der gewünschten Leistung werden von dem Fahrzeugsteuergerät 18 auch Informationen über die mögliche Maximal- bzw. Minimallast des Elektromotors 12 in Form der Momentengrenzen und deren möglichen Dauer, welche von der gespeicherten Energiemenge abhängen, an das Motorsteuergerät 7 gesendet. In Abhängigkeit der genannten Werte und der Laständerung wird in dem Motorsteuergerät 7 festgelegt, welche Steuer- und Regelstruktur eingesetzt wird.

Bei der Laständerung sind zwei Fälle zu unterscheiden:
Der erste Fall ist eine Lastanhebung des Verbrennungsmotors 1. Ist dabei die Laständerung zum vorhergehenden Ereignis gering und/oder der Elektromotor 12 hat noch ausreichend Energie- und Leistungsreserven, wird eine Steuerung des Luftpfades vorgenommen. D.h. es wird ein VTG-Steller ( Variable Turbinen Geometrie) des Abgasturboladers, welcher für die Frischluftzufuhr zum Brennraum des Verbrennungsmotors 1 verantwortlich ist, genauso gesteuert, wie ein AGR-Ventil (Abgasrückführung), über welches abgasbelastete Luft in den Brennraum zurückgeführt wird.

In Abhängigkeit von dieser aus Luft und Abgas bestehenden Füllungszusammensetzung im Brennraum werden die Einspritzmenge und somit auch die Last geregelt.
Die Regelung ist dabei auf eine Bestimmung des Sauerstoff- und des Abgasgehaltes angewiesen. Da das sich so einstellende Drehmoment des Verbrennungsmotors 1 im Vergleich zum Wunschdrehmoment zu niedrig ausfällt, wird über das Fahrzeugsteuergerät 18 eine erhöhte Drehmomentenanforderung an den Elektromotor 12 gestellt.

Andererseits wird, wenn die gewünschte Laständerung für den Verbrennungsmotor sehr groß ist und/oder der Elektromotor nur noch geringe Leistungsreserven bzw. der Energiespeicher nur noch geringe Energiereserven besitzt, eine Steuerung der Einspritzmenge vorgenommen und der Luftpfad geregelt.

Der zweite Fall ist eine Lastabsenkung des Verbrennungsmotors 1. Bei einer solchen Lastabsenkung würde im konventionellen Fahrzeug (kein Hybridantrieb) die Luftmenge zu langsam abnehmen.
Ist die Absenkung der Last nur gering im Vergleich zum vorhergehenden Zeitraum und/oder der Elektromotor verfügt noch über eine Generatorreserve, wobei der Energiespeicher noch Energie aufnehmen kann, wird hier eine Steuerung des Luftpfades vorgenommen. Die Einspritzmenge wird nach der sich aktuell im Brennraum einstellenden Füllung geregelt. Die dabei zu hohe Verbrennungsmotorleistung wird über den Elektromotor 12 als Generator in den Energiespeicher aufgenommen.

Wenn die zusätzliche Last nicht von dem Elektromotor 12 und /oder dem Energiespeicher aufgenommen werden kann, wird die Einspritzmenge gesteuert und der Luftpfad geregelt.

Auf eine Regelung des Luftpfades wird also nur zurückgegriffen, wenn der elektrische Antriebsstrang die zum Ausgleich notwendige Last nicht aufbringen oder auffangen kann.

Die Konsequenz dieser Abstimmung besteht darin, dass der Verbrennungsmotor in einem quaistationären Betrieb arbeitet. Dies geschieht in erster Linie deshalb, um geringere Schadstoffemissionen zu erreichen.
Die dynamischen Leistungen werden von dem Elektromotor in den Grenzen abgefangen, welche das Gesamtsystem vorgibt.

Das beschriebene Verfahren ist Bestandteil einer Betriebsstrategie, bei welcher der Verbrennungsmotor nur in verbrauchsgünstigen und emissionsoptimalen Bereichen betrieben wird.

## Patentansprüche

1. Verfahren zur Ansteuerung eines Fahrzeuges mit Hybridantrieb, bei welchem während des Fahrbetriebes ein Verbrennungsmotor und ein zweites Antriebsaggregat allein oder gemeinsam zum Antriebsmoment des Fahrzeuges beitragen, **dadurch gekennzeichnet, dass** ein Steuer- und Regelverhalten des Verbrennungsmotors in Abhängigkeit von der Betriebsweise des zweiten Antriebsaggregats eingestellt wird und zur Einstellung des Steuer- und Regelverhaltens des Verbrennungsmotors mindestens zwei Steuer- und Regelzuständen ausgewählt werden, wobei der erste Steuer- und Regelzustand des Verbrennungsmotors eine Steuerung einer Einspritzmenge und eine Regelung eines Luftpfades umfasst, während der zweite Steuer- und Regelzustand des Verbrennungsmotors die Steuerung des Luftpfades und die Regelung der Einspritzmenge umfasst.

2. Verfahren nach Anspruch 1 **dadurch gekennzeichnet, dass** eine Steuer- und Regelstruktur des Verbrennungsmotors zur Umschaltung zwischen den mindestens zwei Steuer- und Regelzuständen Betriebsparameter des zweiten Antriebsaggregates von einer übergeordneten Koordinierungseinheit übermittelt werden.

3. Verfahren nach Anspruch 2 **dadurch gekennzeichnet, dass** die Betriebsparameter von einer Steuereinheit des als Elektromotor ausgebildeten zweiten Antriebsaggregates und /oder einem Batteriemanagementsystem an die Koordinierungseinheit übertragen werden.

4. Verfahren nach Anspruch 3 **dadurch gekennzeichnet, dass** durch die Koordinierungseinheit das Antriebsmoment auf den Verbrennungsmotor und das zweite Antriebsaggregat aufgeteilt werden.

5. Verfahren nach Anspruch 4 **dadurch gekennzeichnet, dass** die Koordinierungseinheit die Drehmomentenanforderung erfasst und in Abhängigkeit des Ist- Momentes des Verbrennungsmotors und des Betriebszustandes des zweiten Antriebsaggregates die Antriebsmomentenaufteilung auf den Verbrennungsmotor und das zweite Antriebsaggregat vornimmt.

6. Verfahren nach Anspruch 3, 4 oder 5 **dadurch gekennzeichnet, dass** die Koordinierungseinheit mindestens eine Fahrzeugsteuerung enthält.

7. Verfahren nach Anspruch 1 **dadurch gekennzeichnet, dass** im zweiten Steuer- und Regelzustand des Verbrennungsmotors in einen Brennraum des Verbrennungsmotors Kraftstoff vor der Zündung teilweise eingespritzt und homogenisiert und teilweise erst nach der Zündung in den Brennraum eingespritzt wird.

8. Anordnung zur Ansteuerung eines Fahrzeuges mit einem Hybridantrieb, bei welchem ein Verbrennungsmotor mit einem Motorsteuergerät und ein zweites Antriebsaggregat mit einem Antriebssteuergerät verbunden sind, welche jeweils das Drehmoment des Verbrennungsmotors bzw. das Drehmoment des zweiten Antriebsaggregates einstellen, **dadurch gekennzeichnet, dass** das Motorsteuergerät (7) eine Steuer- und Regelstruktur aufweist, welche das Steuer- und Regelverhalten des Verbrennungsmotors (1) in Abhängigkeit des Betriebszustandes des zweiten Antriebsaggregates (12) einstellt und das Motorsteuergerät (7) die Steuer- und Regelstruktur zwischen mindestens zwei Steuer- und Regelzuständen umschaltet, wobei der erste Steuer- und Regelzustand des Verbrennungsmotors eine Steuerung einer Einspritzmenge und eine Regelung eines Luftpfades umfasst, während der zweite Steuer- und Regelzustand des Verbrennungsmotors die Steuerung des Luftpfades und die Regelung der Einspritzmenge umfasst.

9. Anordnung nach Anspruch 8 **dadurch gekennzeichnet, dass** das Motorsteuergerät (7) und das Antriebssteuergerät (14) mit einer die Drehmomentanforderung auf das Motorsteuergerät (7) und das Antriebssteuergerät (14) aufteilenden Koordinierungseinheit (18) verbunden sind.

10. Anordnung nach Anspruch 9 **dadurch gekennzeichnet, dass** die Koordinierungseinheit (18) direkt mit dem Antriebssteuergerät (14) des als Elektromotor ausgebildeten zweiten Antriebaggregates (12) und einem Batteriemanagementsystem (24) verbunden ist.

11. Anordnung nach Anspruch 9 oder 10 **dadurch gekennzeichnet, dass** die Koordinierungseinheit (18) ein Fahrzeugsteuergerät ist.

## Claims

1. Method for controlling a vehicle with a hybrid drive, in which during the driving operation an internal combustion engine and a second drive assembly contribute solely or jointly to the driving torque of the vehicle, **characterized in that** an open-loop and closed-loop control behaviour of the internal combustion engine is set as a function of the mode of operation of the second drive assembly, and in order to adjust the open-loop and closed-loop control behaviour of the internal combustion engine at least two open-loop and closed-loop control states are selected, wherein the first open-loop and closed-loop control state of the internal combustion engine comprises performing open-loop control of an injection quantity and closed-loop control of an air path, while the second open-loop and closed-loop control state of the internal combustion engine comprises performing open-loop control of the air path and closed-loop control of the injection quantity.

2. Method according to Claim 1, **characterized in that** operating parameters of the second drive assembly are transmitted from a superordinate coordination unit to an open-loop and closed-loop control structure of the internal combustion engine for switching over between the at least two open-loop and closed-loop control states.

3. Method according to Claim 2, **characterized in that** the operating parameters are transmitted from a control unit of the second drive assembly which is embodied as an electric motor and/or a battery management system to the coordination unit.

4. Method according to Claim 3, **characterized in that** the driving torque is divided between the internal combustion engine and the second drive assembly by the coordination unit.

5. Method according to Claim 4, **characterized in that** the coordination unit detects the torque request, and carries out the distribution of the driving torque between the internal combustion engine and the second drive assembly as a function of the actual torque of the internal combustion engine and the operating state of the second drive assembly.

6. Method according to Claim 3, 4 or 5, **characterized in that** the coordination unit contains at least one vehicle controller.

7. Method according to Claim 1, **characterized in that** in the second open-loop and closed-loop control state of the internal combustion engine, fuel is partially injected into a combustion chamber of the internal combustion engine before the ignition process and is homogenized and partially injected into the combustion chamber only after the ignition process.

8. Arrangement for controlling a vehicle with a hybrid drive, in which an internal combustion engine with an engine control unit and a second drive assembly are connected to a drive control unit which each adjust the torque of the internal combustion engine or the torque of the second drive assembly, **characterized in that** the engine control unit (7) has an open-loop and closed-loop control structure which adjusts the open-loop and closed-loop control behaviour of the internal combustion engine (1) as a function of the operating state of the second drive assembly (12), and the engine control unit (7) switches the open-loop and closed-loop control structure between at least two open-loop and closed-loop control states, wherein the first open-loop and closed-loop control state of the internal combustion engine comprises performing open-loop control of an injection quantity and closed-loop control of an air path, while the second open-loop and closed-loop control state of the internal combustion engine comprises performing open-loop control of the air path and closed-loop control of the injection quantity.

9. Arrangement according to Claim 8, **characterized in that** the engine control unit (7) and the drive control unit (14) are connected to a coordination unit (18) which distributes the torque request between the engine control unit (7) and the drive control unit (14).

10. Arrangement according to Claim 9, **characterized in that** the coordination unit (18) is connected directly to the drive control unit (14) of the second drive assembly (12) which is embodied as an electric motor, and a battery management system (24).

11. Arrangement according to Claim 9 or 10, **characterized in that** the coordination unit (18) is a vehicle control unit.

## Revendications

1. Procédé de commande d'un véhicule à propulsion hybride, avec lequel un moteur à combustion interne et un deuxième groupe propulseur contribuent seuls ou ensemble au couple d'entraînement du véhicule pendant le régime de déplacement, **caractérisé en ce qu'**un comportement de commande et de régulation du moteur à combustion interne est réglé en fonction du mode de fonctionnement du deuxième groupe propulseur et au moins deux états de commande et de régulation sont sélectionnés pour le réglage du comportement de commande et de régulation du moteur à combustion interne, le premier état de commande et de régulation du moteur à combustion interne comprenant une commande d'une quantité injectée et une régulation d'un trajet d'air, alors que le deuxième état de commande et de régulation du moteur à combustion interne comprend la commande du trajet d'air et la régulation de la quantité injectée.

2. Procédé selon la revendication 1, **caractérisé en ce que** les paramètres de fonctionnement du deuxième groupe propulseur sont communiqués par une unité de coordination superviseuse à une structure de commande et de régulation du moteur à combustion interne destinée à commuter entre les au moins deux états de commande et de régulation.

3. Procédé selon la revendication 2, **caractérisé en ce que** les paramètres de fonctionnement sont transmis à l'unité de coordination par une unité de commande du deuxième groupe propulseur réalisé sous la forme d'un moteur électrique et/ou par un système de gestion de batterie.

4. Procédé selon la revendication 3, **caractérisé en ce que** le couple d'entraînement est réparti par l'unité de coordination sur le moteur à combustion interne et sur le deuxième groupe propulseur.

5. Procédé selon la revendication 4, **caractérisé en ce que** l'unité de coordination détecte la demande de couple et effectue la répartition des couples d'entraînement sur le moteur à combustion interne et le deuxième groupe propulseur en fonction du couple réel du moteur à combustion interne et de l'état opérationnel du deuxième groupe propulseur.

6. Procédé selon la revendication 3, 4 ou 5, **caractérisé en ce que** l'unité de coordination contient au moins une commande de véhicule.

7. Procédé selon la revendication 1, **caractérisé en ce que** dans le deuxième état de commande et de régulation du moteur à combustion interne, du carburant est partiellement injecté et homogénéisé avant l'allumage dans une chambre de combustion du moteur à combustion interne et n'est partiellement injecté dans la chambre de combustion qu'après l'allumage.

8. Arrangement de commande d'un véhicule à propulsion hybride, dans lequel un moteur à combustion interne est relié à un contrôleur de moteur et un deuxième groupe propulseur est relié à un contrôleur de propulsion, lesquels règlent respectivement le couple du moteur à combustion interne ou le couple du deuxième groupe propulseur, **caractérisé en ce que** le contrôleur de moteur (7) possède une structure de commande et de régulation qui règle le comportement de commande et de régulation du moteur à combustion interne (1) en fonction de l'état opérationnel du deuxième groupe propulseur (12) et le contrôleur de moteur (7) commute la structure de commande et de régulation entre au moins deux états de commande et de régulation, le premier état de commande et de régulation du moteur à combustion interne comprenant une commande d'une quantité injectée et une régulation d'un trajet d'air, alors que le deuxième état de commande et de régulation du moteur à combustion interne comprend la commande du trajet d'air et la régulation de la quantité injectée.

9. Arrangement selon la revendication 8, **caractérisé en ce que** le contrôleur de moteur (7) et le contrôleur de propulsion (14) sont reliés à une unité de coordination (18) qui répartit la demande de couple sur le contrôleur de moteur (7) et le contrôleur de propulsion (14).

10. Arrangement selon la revendication 9, **caractérisé en ce que** l'unité de coordination (18) est reliée directement au contrôleur de propulsion (14) du deuxième groupe propulseur (12) réalisé sous la forme d'un moteur électrique et à un système de gestion de batterie (24).

11. Arrangement selon la revendication 9 ou 10, **caractérisé en ce que** l'unité de coordination (18) est un contrôleur de véhicule.
